# EUROPÄISCHE PATENTSCHRIFT

(11) **EP 2 677 200 B1**
(45) Veröffentlichungstag und Bekanntmachung des Hinweises auf die Patenterteilung: **25.12.2019**
(21) Anmeldenummer: 13171030.3
(22) Anmeldetag: 07.06.2013
(51) Int. Cl.: F16H 25/24

(54) **Linearantrieb**
Linear drive
Entraînement linéaire

(30) Priorität: 22.06.2012 DE 202012102314 U
(43) Veröffentlichungstag der Anmeldung: 25.12.2013
(73) Patentinhaber: RK Rose + Krieger GmbH Verbindungs- und Positioniersysteme, 32423 Minden (DE)
(72) Erfinder: Scheibe, Jörg, 31655 Stadthagen (DE); Lampert, Rolf, 32584 Löhne (DE)
(74) Vertreter: Dantz, Jan Henning

(56) Entgegenhaltungen:
- EP-A1- 2 584 223
- EP-A2- 0 828 093
- EP-A2- 1 120 585
- WO-A1-02/35119
- DE-A1-102008 012 842

## Beschreibung

Die vorliegende Erfindung betrifft einen Linearantrieb nach dem Oberbegriff des Anspruches 1.

Die DE 10 2008 012 842 offenbart einen Linearantrieb mit einer drehbaren Gewindespindel, an der eine verfahrbare Spindelmutter geführt ist. Die Spindelmutter ist dabei drehfest in einem U-förmigen Profil gehalten, wobei an beiden Seiten der Spindelmutter Stützelemente vorgesehen sind, die ebenfalls an dem Profil geführt sind. Die Stützelemente werden an Zwischenanschlägen des Profils angehalten, damit sie die Gewindespindel abstützen. Bei der Abstützung der Gewindespindel besteht das Problem, dass sich das meist aus Aluminium hergestellte U-förmige Profil im Bereich der Schenkel verbiegen kann und gerade bei Linearantrieben mit größerer Länge die Qualität der Abstützung beeinträchtigt wird. Zudem müssen die Stützelemente mit hoher Genauigkeit montiert werden, was vergleichsweise aufwändig ist.

Die DE 100 02 849 offenbart eine Lineareinheit mit mehreren Stützeinheiten für eine Spindelmutter. Die Stützeinheiten weisen seitliche Ansätze auf, die in Längsnuten der Führungsschiene verschiebbar aufgenommen sind. Eine zusätzliche Schiene ist an der Führungsschiene nicht vorgesehen.

Die DE 196 36 272 zeigt eine Linearführungseinrichtung, bei der eine Schiene an einem U-förmigen Profil angeordnet ist. An der Schiene sind Spindelunterstützungseinheiten vorgesehen, die allerdings nicht an der Schiene sondern an dem Profil geführt sind.

Ein weiterer Spindelantrieb ist in der nachveröffentlichten EP 2 584 223 offenbart.

Es ist daher Aufgabe der vorliegenden Erfindung, einen Linearantrieb zu schaffen, der auch bei größeren Längen eine stabile Abstützung der Gewindespindel ermöglicht.

Diese Aufgabe wird mit einem Linearantrieb mit den Merkmalen des Anspruches 1 gelöst.

Erfindungsgemäß ist an dem Profil eine Schiene festgelegt, wobei das mindestens eine Stützelement zur Abstützung der Gewindespindel gegen eine Bewegung senkrecht zur Längsrichtung an der Schiene geführt ist. Dadurch wird vermieden, dass die Führung durch die in gewissem Umfang bewegbar ausgebildeten Schenkel des Profils erfolgt, sondern die am Profil festgelegte Schiene wird zur Führung der Stützelemente eingesetzt, so dass die Gewindespindel besonders stabil durch das mindestens eine Stützelement gehalten werden kann.

Die Schiene ist vorzugsweise an einer bodenseitigen Aufnahme des im Wesentlichen U-förmigen Profils festgelegt. Dabei kann die Festigkeit der Schiene größer ausgebildet sein als die des U-förmigen Profils, beispielsweise kann die Schiene als Stahlschiene ausgebildet sein, während das U-förmige Profil als extrudiertes Aluminiumprofil hergestellt ist.

Gemäß einer bevorzugten Ausgestaltung ist die Schiene als Vollprofil ausgebildet, beispielsweise mit einem im Wesentlichen rechteckigen Querschnitt. Dabei kann die Schiene im Querschnitt einen verbreiterten Kopfabschnitt, einen verjüngten mittleren Abschnitt sowie einen verbreiterten Fußabschnitt aufweisen. Durch eine derartige Profilierung der Schiene ist es möglich, dass das mindestens eine Stützelement einen verbreiterten Kopfabschnitt der Schiene U-förmig umgreift, so dass das Stützelement in einer Ebene senkrecht zur Längsrichtung sicher an der Schiene gehalten ist. Dadurch können Kräfte in unterschiedliche Richtungen von dem Stützelement auf die Schiene übertragen werden. Es ist natürlich auch möglich, andere Profilierungen zu wählen, um eine Bewegung der Stützelemente nur in Längsrichtung der Schiene zuzulassen.

Vorzugsweise sind auf beiden Seiten der Spindelmutter mehrere Stützelemente vorgesehen, die mit der Spindelmutter oder einem an der Spindelmutter fixierten Stützelement koppelbar sind. In einer vorbestimmten Position werden die Stützelemente dann jeweils von der Spindelmutter oder einem an der Spindelmutter fixierten Stützelement entkoppelt, um die Gewindespindel an dieser Position abzustützen. Je nach Länge des Linearantriebes können dann die Stützelemente in vorbestimmten Abständen zueinander angeordnet werden, beispielsweise in einem Bereich zwischen 30 cm und 1 m, insbesondere 40cm bis 70cm.

Wenn mehrere Stützelemente an einer Seite der Spindelmutter festgelegt sind, nimmt die Haltekraft zwischen zwei Stützelementen vorzugsweise von der Spindelmutter weg ab. Dadurch wird gewährleistet, dass bei einer Entkopplung eines Stützelementes von einem benachbarten Stützelement nicht versehentlich mehrere Stützelemente an einer Zwischenposition geparkt werden, sondern lediglich das jeweils äußerste Stützelement, das am weitesten von der Spindelmutter weg angeordnet ist. Die Stützelemente sind dabei über Magneten miteinander oder mit der Spindelmutter gekoppelt. Die Anzahl der Stützelemente auf jeder Seite der Spindelmutter ist dabei abhängig von der Länge der Gewindespindel.

Um die Stützelemente an einer vorbestimmten Zwischenposition an der Schiene zu positionieren, weist jedes Stützelement einen Anschlag auf, der mit einem am Profil vorgesehenen Stopper zusammenwirkt, so dass das Stützelement an dieser vorbestimmten Position die Gewindespindel abstützen kann.

Erfindungsgemäß weist das mindestens eine Stützelement einen Klemmmechanismus auf, mittels dem das Stützelement kraftschlüssig an der Schiene festlegbar ist. Dadurch wird eine besonders stabile Abstützung der Gewindespindel gewährleistet, da das Stützelement bei Erreichen der vorbestimmten Position kraftschlüssig an der Schiene festgelegt wird, so dass Kräfte durch ein Vibrieren der Gewindespindel unmittelbar auf die Schiene abgeleitet werden können.

Gemäß einer weiteren Ausgestaltung der Erfindung weist das mindestens eine Stützelement eine Buchse zur Durchführung der Gewindespindel auf, die elastisch ausgebildet ist und gegen die Gewindespindel vorgespannt ist. Dadurch ist ein Toleranzausgleich möglich und es werden auch kleine Bewegungen der Gewindespindel senkrecht zur Längsrichtung von dem Stützelement aufgenommen. Zudem ist es möglich, die Buchse an ihrer Außenseite mit einem elastischen Dichtmittel einzuhüllen, so dass eine noch bessere Dämpfung erhalten wird.

Für eine leichtgängige Bewegung der Stützelemente können diese über eine Gleitführung an der Schiene verfahrbar gelagert sein. Die Spindelmutter kann ebenfalls drehfest an der Schiene geführt sein, wahlweise über Wälzkörper oder eine Gleitführung.

Die Erfindung wird nachfolgend anhand eines Ausführungsbeispiels mit Bezug auf die beigefügten Zeichnungen näher erläutert. Es zeigen:
- Figur 1: eine perspektivische Ansicht eines erfindungsgemäßen Linearantriebes mit mehreren Detailansichten;
- Figur 2: eine teilweise geschnittene Seitenansicht des Linearantriebes der Figur 1;
- Figuren 2A bis 2F: mehrere Schnittansichten an unterschiedlichen Positionen des Linearantriebes der Figur 2;
- Figur 3: eine perspektivische Explosionsdarstellung eines Stützelementes des Linearantriebes der Figur 1;
- Figuren 4A bis 4D: mehrere Ansichten des zusammengebauten Stützelementes der Figur 3; und
- Figur 5: eine Ansicht verschiedener Platten für die Stützelemente des Linearantriebes.

Ein Linearantrieb 1 umfasst eine drehbar angetriebene Gewindespindel 2, die innerhalb eines im Querschnitt im Wesentlichen U-förmigen Profils 3 angeordnet ist. An der Gewindespindel 2 ist ein Schlitten 4 verfahrbar gelagert, der an einer drehfesten Spindelmutter 5 gehalten ist. Die Gewindespindel 2 kann für einen Kugelgewindetrieb eingesetzt werden oder ein anderes Gewinde aufweisen, beispielsweise ein Trapezgewinde.

An dem Profil 3 ist eine Schiene 6 festgelegt, die zur Führung der Spindelmutter 5 dient. Das Profil 3 ist endseitig mit einem ersten Lager 7 und an der gegenüberliegenden Seite über ein zweites Lager 9 für die Gewindespindel 2 verschlossen. An dem ersten Lager 7 steht ein Zapfen 8 der Gewindespindel 2 hervor, der mit einem nicht dargestellten Antrieb gekoppelt sein kann, um die Gewindespindel 2 anzutreiben.

Der Linearantrieb 1 kann in einer größeren Länge von beispielsweise 2 m bis 10 m hergestellt werden, wobei je nach Länge eine Abstützung der Gewindespindel 2 vorgenommen wird. Hierfür sind um die Gewindespindel 2 mehrere Stützelemente 10, 11, 12, 13 und 14 vorgesehen, die jeweils an der Schiene 6 geführt sind. Die Stützelemente 10, 11, 12, 13, 14 sind jeweils an vorbestimmten Zwischenpositionen an dem Profil 3 positioniert, um in gewissen Abständen die Gewindespindel 2 gegen eine Bewegung senkrecht zur Längsrichtung abzustützen. Auf der zu dem Schlitten 4 gegenüberliegenden Seite sind weitere Stützelemente 10', 11', 12', 13' und 14' vorgesehen, die an dem Schlitten 4 gehalten sind und zwischen dem Ende des Profils 3 benachbart zu dem Lager 9 und dem Schlitten 4 angeordnet sind.

Die Schiene 6 besitzt eine höhere Festigkeit als das Profil 3, das als extrudiertes Aluminiumprofil hergestellt sein kann. Die Schiene 6 kann als Stahlprofil ausgebildet sein, das einen im Wesentlichen rechteckigen Querschnitt mit einem verbreiterten Kopfabschnitt 36, einem schmaleren Mittelabschnitt 37 und einem verbreiterten Fußabschnitt 38 aufweist. Der Fußabschnitt 38 ist an dem Profil 3 festgelegt. Das Profil 3 ist im Querschnitt im Wesentlichen U-förmig ausgebildet und weist zwei Schenkel 30 auf, innerhalb derer die Gewindespindel 2 angeordnet ist. Die Schenkel 30 sind über einen bodenseitigen Abschnitt 31 miteinander verbunden, an dem die Schiene 6 fixiert ist. Durch die Ausbildung eines verdickten Kopfabschnittes 36 können die Spindelmutter 5 sowie die Stützelemente 10 bis 14 der Kopfabschnitt 36 U-förmig umgreifen, so dass ein Abheben der Stützelemente 10 bis 14 sowie der Spindelmutter 5 verhindert wird und eine Führung bereitgestellt wird, die lediglich eine Bewegung in Längsrichtung der Schiene 6 zulässt.

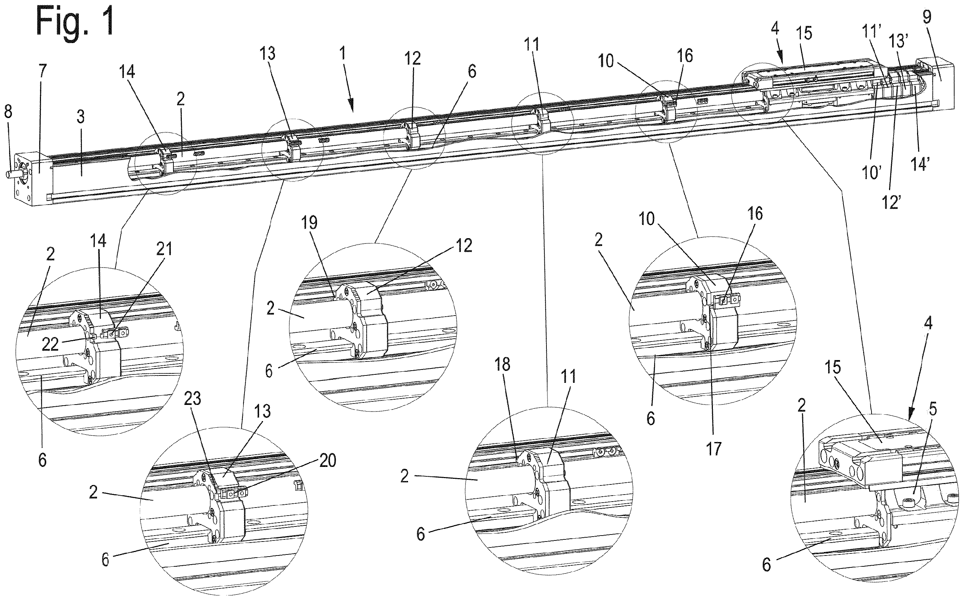

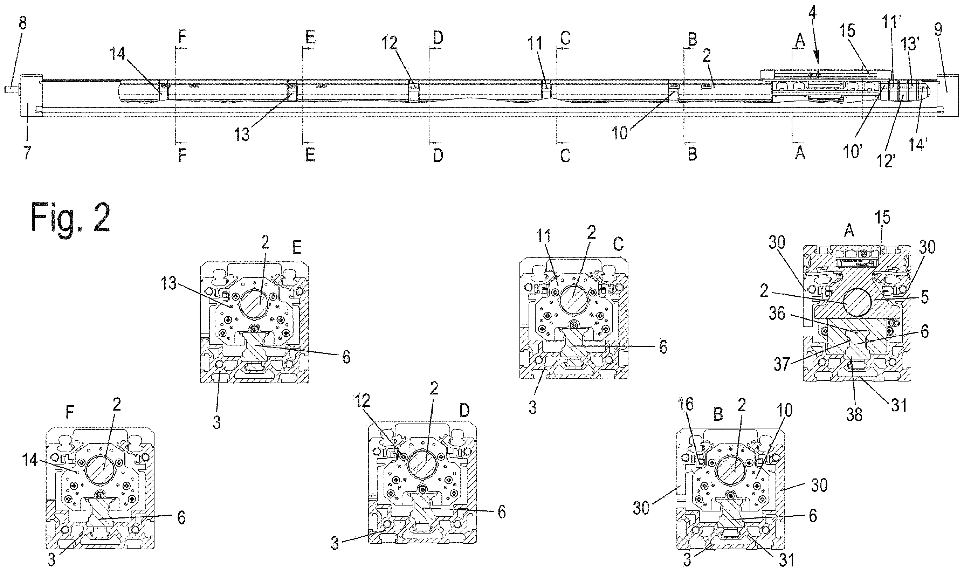

Um die Stützelemente 10, 11, 12, 13, 14 an vorbestimmten Positionen des Profils 3 zu positionieren, weisen diese Anschläge auf. So weist das Stützelement 10 einen Anschlag 17 auf, der mit einem Stopper 16 zusammenwirkt, der an einem Schenkel 30 des Profils 3 montiert ist. Auf ähnliche Weise weist das Stützelement 11 einen Anschlag 18 und das Stützelement 12 einen Anschlag 19 auf, die an unterschiedlichen Positionen angeordnet sind, damit jedes Stützelement 10, 11, 12, 13, 14 mit einem vorbestimmten Stopper an dem Profil 3 zusammenwirkt. Das Stützelement 13 weist einen Anschlag 23 auf, der mit einem Stopper 20 zusammenwirkt, der an dem Profil 3 festgelegt ist. In Querschnittsansicht benachbart hierzu ist ein Anschlag 22 an dem Stützelement 14 vorgesehen, der mit einem Stopper 21 zusammenwirkt. Verfährt der Schlitten 4 mit der Spindelmutter 5 nun von einer in den Figuren 1 und 2 gezeigten Position auf der linken Seite nach rechts, gelangt zunächst der Anschlag 22 in Kontakt mit dem Stopper 21, so dass das Stützelement 14 an dieser Position angehalten wird und die Spindelmutter 5 mit den weiteren Stützelementen 10 bis 13 weiter nach rechts verfahren werden kann. Nachfolgend werden dann die Stützelemente 13, 12, 11 und 10 an den vorbestimmten Positionen angehalten, bis die in den Figuren 1 und 2 gezeigte Endposition erreicht ist. In dieser Position wird die Gewindespindel 2 durch die Stützelemente 10 bis 14 in eine Richtung senkrecht zur Längsrichtung abgestützt.

Wird die Gewindespindel 2 nun in eine gegenläufige Richtung angetrieben, bewegt sich die Spindelmutter 5 mit dem Schlitten 4 nach links. Dann werden die Stützelemente 10 bis 14 an der Spindelmutter 5 bzw. dem Schlitten 4 eingesammelt, während die Stützelemente 10', 11', 12', 13' und 14' an vorbestimmten Stoppern an dem Profil 3 angehalten werden, um dann die Gewindespindel 2 abzustützen.

Die Stützelemente 10 bis 14 einerseits und 10' bis 14' andererseits sind aneinander über Magnetkräfte gehalten, wobei die Haltekräfte der Magneten von der Spindelmutter 5 hin abnehmen. Die äußeren Stützelemente 14 und 14' sind somit leichter von den benachbarten Stützelementen 13 bzw. 13' zu lösen, als die Stützelemente 13 und 13' von den weiter innen liegenden Stützelemente 12 und 12'. Auf diese Weise wird verhindert, dass an einem Stopper versehentlich mehrere Stützelemente 10 bis 14 und 10' bis 14' angehalten werden.

An der Spindelmutter 5 ist ein Schlitten 4 festgelegt, der eine Plattform 15 aufweist, an der beliebige Bauteile fixiert werden können, die über den Linearantrieb 1 verfahren werden sollen.

Wie in den Figuren 2A bis 2F gezeigt ist, umgreifen sowohl die Spindelmutter 5 als auch die Stützelemente 10 bis 14 den oberen Kopfabschnitt 36 der Schiene 6 U-förmig. Die Schiene 6 besitzt dabei einen ähnlich großen Querschnitt wie die Gewindespindel 2, so dass eine stabile Abstützung der Stützelemente 10 bis 14 an der Schiene 6 gewährleistet ist. Die Schiene 6 kann über Schraubverbindungen oder andere Befestigungsmittel an dem bodenseitigen Abschnitt 31 des Profils 3 festgelegt sein.

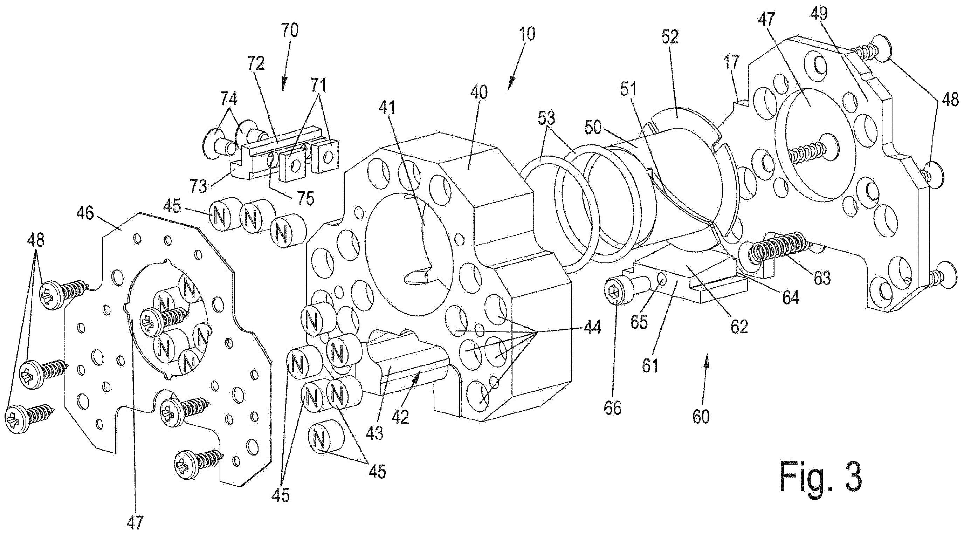

In Figur 3 ist ein Stützelement 10 im Detail gezeigt, wobei die anderen Stützelemente 11 bis 14 und 10' bis 14' ähnlich aufgebaut sind, lediglich die Position des jeweiligen Anschlages 17 variiert. Zudem ist die Anzahl der Magnete 45 an den Stützelementen 11 bis 14 bzw. 10' bis 14' unterschiedlich.

Das Stützelement 10 umfasst einen mittleren Stützkörper 40, in dem eine kreisförmige Durchführung für die Gewindespindel 2 ausgespart ist. Der Stützkörper 40 umfasst eine U-förmige Aufnahme 42, die auf den verbreiterten Kopfabschnitt 36 der Schiene 6 aufschiebbar ist. An der U-förmigen Aufnahme 42 sind nach innen gerichtete Stege mit Führungsflächen 43 ausgebildet, die den verbreiterten Kopfabschnitt 36 hintergreifen.

In dem Stützkörper 40 ist ferner eine Vielzahl von Aussparungen 44 ausgebildet, die zur Aufnahme jeweils eines Magneten 45 dienen. Die Anzahl der Magnete 45, die in die Aussparungen 44 eingefügt werden, bestimmt die Haltekräfte zwischen dem Stützelement 10 und einem benachbarten Stützelement 11. Die Stützelemente, die näher an der Spindelmutter 5 angeordnet sind, weisen mehr Magnete 45 auf als weiter außen liegende Stützelemente, so dass die Haltekräfte zwischen zwei Stützelementen von der Spindelmutter weg abnehmen. Die Aussparungen 44 des Stützkörpers 40 sind durch eine Platte 46 verschlossen, die für die Magnetkräfte durchlässig ist, beispielsweise aus Aluminium besteht, und ein Herausfallen der Magnete 45 verhindert. Die Platte 46 weist ebenfalls eine Durchführungen 47 für die Gewindespindel 2 auf, wobei die Platte 46 über mehrere Schrauben 48 an dem Stützkörper 40 fixiert ist.

Auf der zu der Platte 46 gegenüberliegenden Seite ist eine weitere Platte 49 vorgesehen, die über Schrauben 48 an dem Stützkörper 40 festgelegt ist. Die Platte 49 besteht aus Metall und kann an Magneten eines benachbarten Stützelementes oder der Spindelmutter 5 durch Magnetkräfte fixiert werden.

An dem mittleren Stützkörper 40 ist in der Durchführung 41 eine Buchse 50 eingesetzt, die geschlitzt ausgebildet ist und mit einer Vorspannung gegen die äußeren Umfang der Gewindespindel 2 gedrückt wird. Hierfür sind um die Buchse 50 elastische O-Ringe 53 vorgesehen, die am äußeren Umfang an der Durchführung 41 des Stützkörpers 40 anliegen und an der Innenseite die Buchse 50 elastisch gegen die Gewindespindel 2 vorspannen. Die Buchse 50 weist einen radial hervorstehenden Kragen 52 auf, der zwischen der Platte 49 und einer Stirnseite des Stützkörpers 40 angeordnet ist, so dass die Buchse 50 in axiale Richtung nicht verrutschen kann. Benachbart zu den O-Ringen 53 kann ein elastisches Dichtmittel eingespritzt sein, um die Dämpfung noch weiter zu verbessern, was zu geringeren Vibrationen an der Gewindespindel 2 und zu weniger Geräuschentwicklung führt.

Zur Festlegung des Stützelementes 10 an der Schiene 6 ist ein Klemmmechanismus 60 vorgesehen, der ein Klemmelement 61 aufweist, das eine zur Längsrichtung der Schiene 6 geneigte Anlaufschräge 62 umfasst. Das Klemmelement 61 ist durch eine Feder 63 in Längsrichtung vorgespannt. Die Feder 63 ist dabei zwischen der Platte 49 und einer Stirnseite 64 an dem Mitnehmerelement 61 abgestützt. Auf der zur Feder 63 gegenüberliegenden Seite ist eine Schraube 66 in eine Gewindebohrung 65 an dem Klemmelement 61 eingedreht, die über die Platte 46 hervorsteht, wobei die Überstand einstellbar ist.

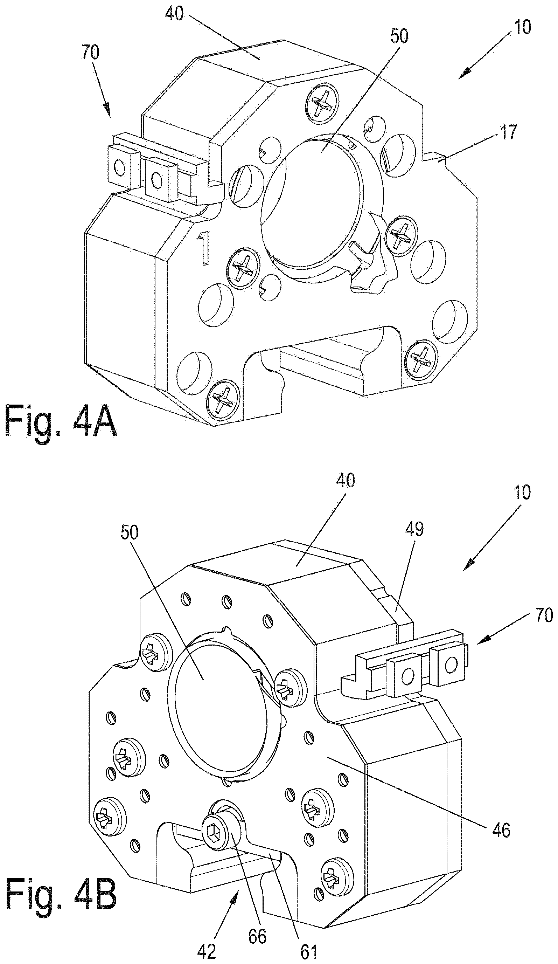

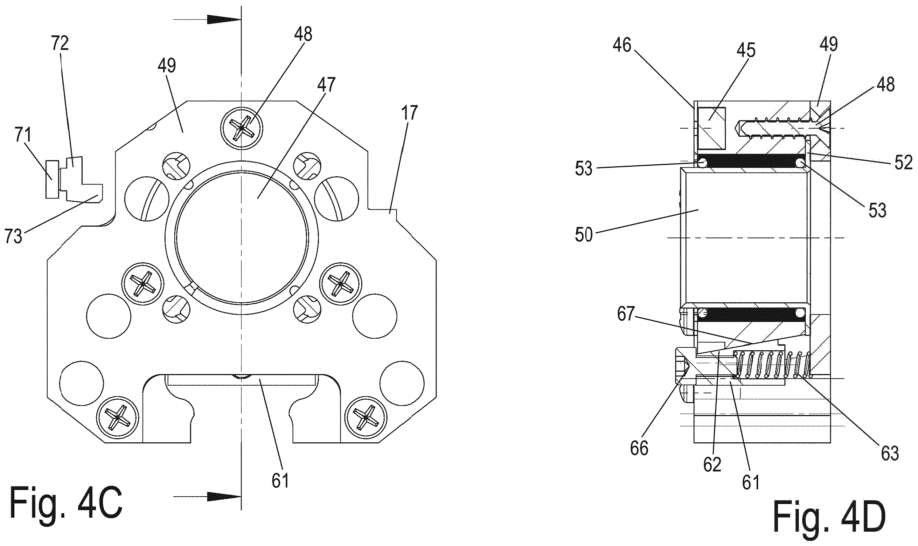

In den Figuren 4A bis 4D ist das Stützelement 10 in einer zusammengebauten Position dargestellt. Der Klemmmechanismus 60 ist oberhalb der Aufnahme 42 zum Aufnehmen des Kopfabschnittes 36 der Schiene 6 angeordnet. Die Schraube 66 steht dabei in Längsrichtung der Schiene 6 über die Platte 46 hervor und kann in Längsrichtung gegen die Kraft der Feder 63 eingedrückt werden.

Die Anlaufschräge 62 des Klemmelementes 61 wirkt mit einer Schräge 67 des Stützkörpers 40 zusammen, wobei durch die Kraft der Feder 63 das Klemmelement 61 gegen die Schräge 67 gedrückt wird, so dass durch die Kraft der Feder 63 das Klemmelement 61 nach unten gegen die Schiene 6 gedrückt wird. Dadurch kann das Stützelement 10 klemmend an der Schiene 6 fixiert werden. Die Schraube 66 dient dabei auch der Tiefeneinstellung für das Klemmelement 61.

Soll das Stützelement 10 nun aus der angeklemmten Position an der Schiene 6 verfahren werden, wird der Klemmmechanismus 60 entriegelt. Hierfür wird die Spindelmutter 5 oder der Schlitten 4 zu dem Stützelement 10 verfahren, wobei eine Anschlagfläche zuerst auf die Schraube 66 auftrifft, bevor ein Kontakt zwischen der Platte 46 und dem Schlitten 4 oder der Spindelmutter 5 erfolgt. Dadurch wird die Schraube 66 gegen die Kraft der Feder 63 eingedrückt und bewegt somit das Klemmelement 61 in Richtung der Platte 49. Dadurch werden die auf die Schiene 6 wirkenden Klemmkräfte aufgehoben, da das Klemmelement 61 nicht mehr durch die Anlaufschräge 62 und die Schräge 67 gegen die Schiene 6 vorgespannt ist.

Die durch die Magnete 45 aufgebrachten Haltekräfte zu der Spindelmutter 5 oder dem Schlitten 4 bzw. zu einem benachbarten Stützelement 11 bis 14 sind dabei größer als die Kraft der Feder 63, so dass ein versehentliches Lösen aus der gekoppelten Position durch die Feder 63 verhindert wird.

Das Stützelement 10 kann nach der Entriegelung des Klemmmechanismus 60 entlang der Schiene 6 leichtgängig verfahren werden, wobei der Stützkörper 40 für eine Führung entlang der Schiene 6 sorgt und der Klemmmechanismus 60 außer Eingriff ist. Wird nun das Stützelement 10 an dem Stopper 16 an dem Profil 3 angehalten und die Spindelmutter 5 mit dem Schlitten 4 bewegt sich weg von dem Stützelement 10, wird die Schraube 66 freigegeben und der Klemmmechanismus 60 wird durch den Druck der Feder 63 aktiviert und klemmt durch die Schräge 67 und die Anlaufschräge 62 das Klemmelement 61 wieder gegen die Schiene 6.

Die anderen Stützelemente 11 bis 14 sind wie das Stützelement 10 aufgebaut, bis auf die Position des Anschlages 17 und die Anzahl der Magneten 45. Im Übrigen wird hinsichtlich der Ausgestaltung der Stützelemente 11 bis 14 und 10' bis 14' auf obige Ausführungen verwiesen.

In den Figuren 3 und 4A bis 4D ist ferner noch ein Stopper 70 gezeigt, der an einer Nut des Profils 3 festlegbar ist. Der Stopper 70 umfasst zwei Nutensteine 71, die in eine entsprechende Nut an den Schenkeln 30 des Profils 3 einfügbar sind. Die Nutensteine 71 sind über Schrauben 74 mit einer Leiste 72 verbunden, die einen hervorstehenden Schenkel 73 umfasst, der als Anschlagsfläche dient. In der Leiste 72 sind Öffnungen 75 zum Durchführen der Schrauben 74 vorgesehen, so dass über die Schrauben 74 die Leiste 72 an der gewünschten Zwischenposition des Profils 3 festgelegt werden kann. Dadurch wird der Stopper 70 an dem Profil 3 festgelegt und definiert eine Anschlagsposition für eines der Stützelemente 10 bis 14 oder 10' bis 14'. Es ist natürlich auch möglich, dass ein Stopper 70 für zwei Stützelemente 10 bis 14 oder 10' bis 14' jeweils einen Anschlag definiert, und zwar für Stützelemente, die sich an gegenüberliegenden Seiten der Spindelmutter 5 befinden. Über die Länge des Profils 3 verteilt sind eine Vielzahl solcher Stopper 70 montiert, die jeweils einen Anschlag für eines der Stützelemente 10 bis 14 oder 10' bis 14' definiert. Dabei dürfen sich die am Profil 3 fixierten Stopper 70 gegenseitig nicht behindern, weshalb eine Anschlagsfläche des Stoppers 70 in Querschnittsansicht an unterschiedlichen Positionen angeordnet wird.

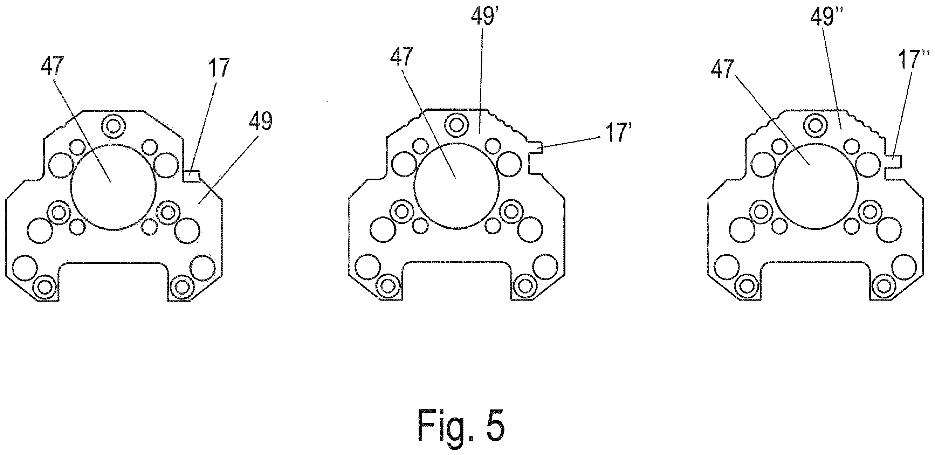

In Figur 5 sind Platten 49, 49' und 49" gezeigt, die an unterschiedlichen Stützelementen 10 bis 14 oder 10' bis 14' fixiert werden. Die Platte 49 des Stützelementes 10 weist den Anschlag 17 auf, während die Platte 49' den Anschlag 17' und die Platte 49" den Anschlag 17" aufweist. Die Platten 49, 49' und 49" können dabei mir der Oberseite oder der Unterseite an einem Stützkörper 40 montiert werden, so dass die Anschläge 17, 17', 17" in einer Querschnittsansicht der Gewindespindel 2 an unterschiedlichen Positionen angeordnet sind, wobei mit den drei Platten 49, 49' und 49" bei beidseitiger Montage sechs Anschlagspositionen definiert werden können.

In dem dargestellten Ausführungsbeispiel ist das Profil 3 im Querschnitt U-förmig ausgebildet. Es ist natürlich möglich, den Linearantrieb 1 auch mit einem Profil 3 mit einem anderen Querschnitt herzustellen. Zudem kann der Querschnitt der Schiene 6 ebenfalls variiert werden, um eine stabile lineare Führung der Spindelmutter 5 und der Stützelemente 10 bis 14 und 10' bis 14' zu ermöglichen. Die Führung der Stützelemente 10 bis 14 und 10' bis 14' sowie der Spindelmutter 5 kann als Gleitführung ausgebildet sein, aber es können auch Wälzkörper vorgesehen werden, um die Führung noch leichtgängiger zu machen.

Die Stützelemente 10 bis 14 und 10' bis 14' können zudem mit Dämpfungsmittel ausgestattet sein, um laute Anschlaggeräusche zu vermeiden. Insbesondere beim schnellen Verfahren des Schlittens 4 können die Stützelemente 10 bis 14 und 10' bis 14' mit höherer Geschwindigkeit aufeinandertreffen, so dass an den Kontaktflächen elastische Elemente, beispielsweise Gummidämpfer oder andere elastische Bauteile vorgesehen werden können, um die Geräusche zu vermindern. Zudem kann zumindest eine der Platten 46 und/oder 49 mit einer elastischen Beschichtung versehen sein.

### Bezugszeichenliste

- 1: Linearantrieb
- 2: Gewindespindel
- 3: Profil
- 4: Schlitten
- 5: Spindelmutter
- 6: Schiene
- 7: Lager
- 8: Zapfen
- 9: Lager
- 10, 10': Stützelement
- 11, 11': Stützelement
- 12, 12': Stützelement
- 13, 13': Stützelement
- 14, 14': Stützelement
- 15: Plattform
- 16: Stopper
- 17: Anschlag
- 18: Anschlag
- 19: Anschlag
- 20: Stopper
- 21: Stopper
- 22: Anschlag
- 23: Anschlag
- 30: Schenkel
- 31: Abschnitt
- 36: Kopfabschnitt
- 37: Mittelabschnitt
- 38: Fußabschnitt
- 40: Stützkörper
- 41: Durchführung
- 42: Aufnahme
- 43: Führungsfläche
- 44: Aussparung
- 45: Magnet
- 46: Platte
- 47: Durchführung
- 48: Schraube
- 49: Platte
- 50: Buchse
- 52: Kragen
- 53: O-Ring
- 60: Klemmmechanismus
- 61: Klemmelement/Mitnehmerelement
- 62: Anlaufschräge
- 63: Feder
- 64: Stirnseite
- 65: Gewindebohrung
- 66: Schraube
- 67: Schräge
- 70: Stopper
- 71: Nutenstein
- 72: Leiste
- 73: Schenkel
- 74: Schraube
- 75: Öffnung

## Patentansprüche

1. Linearantrieb (1), umfassend:
a) eine drehbar angetriebene Gewindespindel (2);
b) eine drehfest geführte Spindelmutter (5), die durch die Gewindespindel (2) in eine Längsrichtung bewegbar ist;
c) ein sich in Längsrichtung erstreckendes Profil (3);
d) eine an dem Profil (3) festgelegte Schiene (6);
e) mindestens ein Stützelement (10-14; 10'-14') zur Abstützung der Gewindespindel (2) gegen eine Bewegung senkrecht zur Längsrichtung, wobei das mindestens eine Stützelement (10-14: 10'-14') an der Schiene (6) geführt ist,
f) wobei jedes Stützelement (10-14; 10'-14') einen Stützkörper (40) aufweist, an dessen einer Seite ein Anschlag (17) montiert ist,
**dadurch gekennzeichnet, dass** die Stützelemente (10-14; 10'-14') über Magneten (45) miteinander und/oder mit der Spindelmutter (5) koppelbar sind, und das mindestens eine Stützelement (10-14; 10'-14') einen Klemmmechanismus (60) aufweist, mittels dem das Stützelement (10-14; 10'-14') kraftschlüssig an der Schiene (6) festlegbar ist.

2. Linearantrieb nach Anspruch 1, **dadurch gekennzeichnet, dass** die Schiene (6) an einer bodenseitigen Aufnahme des im Wesentlichen U-förmigen Profils (3) festgelegt ist.

3. Linearantrieb nach Anspruch 1 oder 2, **dadurch gekennzeichnet, dass** die Schiene (6) als Stahlschiene ausgebildet ist.

4. Linearantrieb nach einem der vorhergehenden Ansprüche, **dadurch gekennzeichnet, dass** die Schiene (6) als Vollprofil mit im Wesentlichen rechteckigem Querschnitt ausgebildet ist.

5. Linearantrieb nach Anspruch 4, **dadurch gekennzeichnet, dass** die Schiene (6) im Querschnitt einen mittleren verjüngten Abschnitt (37) und einen verbreiterten Kopfabschnitt (36) aufweist.

6. Linearantrieb nach Anspruch 5, **dadurch gekennzeichnet, dass** das mindestens eine Stützelement (10-14; 10'-14') einen Kopfabschnitt (36) der Schiene (6) U-förmig umgreift.

7. Linearantrieb nach einem der vorhergehenden Ansprüche, **dadurch gekennzeichnet, dass** auf beiden Seiten der Spindelmutter (5) mehrere Stützelemente (10-14, 10'-14') vorgesehen sind, die mit der Spindelmutter (5) oder einem an der Spindelmutter (5) fixierten Stützelement (10-14; 10'-14') koppelbar sind und in einer vorbestimmten Position von der Spindelmutter (5) oder einem an der Spindelmutter (5) fixierten Stützelement (10-14; 10'-14') entkoppelbar ist, um die Gewindespindel (2) abzustützen.

8. Linearantrieb nach einem der vorhergehenden Ansprüche, **dadurch gekennzeichnet, dass** die Haltekraft zwischen zwei Stützelementen (10-14; 10'-14') von der Spindelmutter (5) weg abnimmt.

9. Linearantrieb nach einem der vorhergehenden Ansprüche, **dadurch gekennzeichnet,** der Anschlag (17) mit einem am Profil (3) vorgesehenen Stopper (16, 20, 21, 70) zusammenwirkt, um das Stützelement (10-14; 10'-14') in einer vorbestimmten Position in Längsrichtung der Gewindespindel (2) an der Schiene (6) anzuhalten.

10. Linearantrieb nach einem der vorhergehenden Ansprüche, **dadurch gekennzeichnet, dass** der Anschlag (17) an einer Platte (49) ausgebildetet ist.

11. Linearantrieb nach einem der vorhergehenden Ansprüche, **dadurch gekennzeichnet, dass** das mindestens eine Stützelement (10-14; 10'-14') eine Buchse (50) zur Durchführung der Gewindespindel (2) aufweist, die gegen die Gewindespindel (2) vorgespannt ist.

12. Linearantrieb nach einem der vorhergehenden Ansprüche, **dadurch gekennzeichnet, dass** die Stützelemente (10-14; 10'-14') über eine Gleitführung an der Schiene (6) verfahrbar gelagert sind.

13. Linearantrieb nach einem der vorhergehenden Ansprüche, **dadurch gekennzeichnet, dass** die Spindelmutter (5) drehfest an der Schiene (6) geführt ist, insbesondere über Wälzkörper oder eine Gleitführung an der Schiene (6) verfahrbar gelagert ist.

## Claims

1. Linear drive (1), comprising:
a) a rotatably driven threaded spindle (2);
b) a non-rotatably guided spindle nut (5) which can be moved in a longitudinal direction by the threaded spindle (2);
c) a longitudinally extending profile (3);
d) a rail (6) fixed to the profile (3);
e) at least one support element (10-14; 10'-14') for supporting the threaded spindle (2) against a movement perpendicular to the longitudinal direction, wherein the at least one support element (10-14; 10'-14') is guided on the rail (6),
f) wherein each support element (10-14; 10'-14') has a support body (40) on one side of which a stop (17) is mounted,
**characterized in that** the support elements (10-14; 10'-14') can be coupled to one another and/or to the spindle nut (5) via magnets (45), and the at least one support element (10-14; 10'-14') has a clamping mechanism (60) by means of which the support element (10-14; 10'-14') can be fixed to the rail (6)by frictional engagement.

2. Linear drive according to claim 1, **characterized in that** the rail (6) is fixed to a base-side receptacle of the essentially U-shaped profile (3).

3. Linear drive according to claim 1 or 2, **characterized in that** the rail (6) is designed as a steel rail.

4. Linear drive according to one of the preceding claims, **characterized in that** the rail (6) is designed as a solid profile with a substantially rectangular cross-section.

5. Linear drive according to claim 4, **characterized in that** the rail (6) has in cross-section a central tapered section (37) and a widened head section (36).

6. Linear drive according to claim 5, **characterized in that** the at least one support element (10-14; 10'-14') embraces a head section (36) of the rail (6) in a U-shaped manner.

7. Linear drive according to one of the preceding claims, **characterized in that** a plurality of support elements (10-14, 10'-14') are provided on both sides of the spindle nut (5), which support elements can be coupled to the spindle nut (5) or to a support element (10-14; 10'-14') fixed to the spindle nut (5) and can be decoupled in a predetermined position from the spindle nut (5) or a support element (10-14, 10'-14') fixed to the spindle nut (5), in order to support the threaded spindle (2).

8. Linear drive according to one of the preceding claims, **characterized in that** the holding force between two support elements (10-14, 10'-14') decreases away from the spindle nut (5).

9. Linear drive according to one of the preceding claims, **characterized in that** the stop (17) cooperates with a stopper (16, 20, 21, 70) provided on the profile (3) in order to stop the support element (10-14; 10'-14') in a predetermined position on the rail (6) in the longitudinal direction of the threaded spindle (2).

10. Linear drive according to one of the preceding claims, **characterized in that** the stop (17) is formed on a plate (49).

11. Linear drive according to one of the preceding claims, **characterized in that** the at least one support element (10-14; 10'-14') has a bush (50) for passing through the threaded spindle (2), which bush is pretensioned against the threaded spindle (2).

12. Linear drive according to one of the preceding claims, **characterized in that** the support elements (10-14; 10'-14') are movably mounted on the rail (6) via a sliding guide.

13. Linear drive according to one of the preceding claims, **characterized in that** the spindle nut (5) is non-rotatably guided on the rail (6), in particular displaceably mounted on the rail (6) via rolling elements or a sliding guide.

## Revendications

1. Entraînement linéaire (1) comprenant :
a) une broche filetée (2) entraînée en rotation ;
b) un écrou de broche (5) guidé de manière bloquée en rotation qui peut être déplacé dans une direction longitudinale par la broche filetée (2) ;
c) un profilé (3) s'étendant dans la direction longitudinale ;
d) un rail (6) fixé au profilé (3) ;
e) au moins un élément de support (10-14 ; 10'-14') pour supporter la broche filetée (2) contre un mouvement perpendiculaire à la direction longitudinale, ledit au moins un élément de support (10-14 ; 10'-14') étant guidé sur le rail (6),
f) chaque élément de support (10-14 ; 10'-14') présentant un corps de support (40), sur un côté duquel est montée une butée (17),
**caractérisé en ce que** les éléments de support (10-14 ; 10'-14') peuvent être couplés l'un à l'autre et/ou à l'écrou de broche (5) au moyen d'aimants (45), et ledit au moins un élément de support (10-14 ; 10'-14') présente un mécanisme de serrage (60) au moyen duquel l'élément de support (10-14 ; 10'-14') peut être fixé au rail (6) par force.

2. Entraînement linéaire selon la revendication 1, **caractérisé en ce que** le rail (6) est fixé à un logement côté fond du profilé (3) sensiblement en U.

3. Entraînement linéaire selon la revendication 1 ou 2, **caractérisé en ce que** le rail (6) est réalisé sous la forme d'un rail en acier.

4. Entraînement linéaire selon l'une des revendications précédentes, **caractérisé en ce que** le rail (6) est réalisé sous la forme d'un profilé massif avec une section transversale sensiblement rectangulaire.

5. Entraînement linéaire selon la revendication 4, **caractérisé en ce que** le rail (6) présente, en section transversale, une partie centrale rétrécie (37) et une partie supérieure élargie (36) .

6. Entraînement linéaire selon la revendication 5, **caractérisé en ce que** ledit au moins un élément de support (10-14 ; 10'-14') enserre en forme de U une partie supérieure (36) du rail (6).

7. Entraînement linéaire selon l'une des revendications précédentes, **caractérisé en ce que** plusieurs éléments de support (10-14, 10'-14') sont prévus des deux côtés de l'écrou de broche (5), lesquels peuvent être couplés à l'écrou de broche (5) ou à un élément de support (10-14 ; 10'-14') fixé à l'écrou de broche (5) et peuvent être découplés, dans une position prédéterminée, de l'écrou de broche (5) ou d'un élément de support (10-14 ; 10'-14') fixé à l'écrou de broche (5) pour supporter la broche filetée (2).

8. Entraînement linéaire selon l'une des revendications précédentes, **caractérisé en ce que** la force de maintien entre deux éléments de support (10-14 ; 10'-14') diminue en s'éloignant de l'écrou de broche (5).

9. Entraînement linéaire selon l'une des revendications précédentes, **caractérisé en ce que** la butée (17) coopère avec un arrêt (16, 20, 21, 70) prévu sur le profilé (3) pour arrêter l'élément de support (10-14 ; 10'-14') dans une position prédéterminée sur le rail (6) dans la direction longitudinale de la broche filetée (2).

10. Entraînement linéaire selon l'une des revendications précédentes, **caractérisé en ce que** la butée (17) est formée sur une plaque (49).

11. Entraînement linéaire selon l'une des revendications précédentes, **caractérisé en ce que** ledit au moins un élément de support (10-14 ; 10'-14') présente une douille (50) pour le passage de la broche filetée (2), laquelle douille est précontrainte contre la broche filetée (2).

12. Entraînement linéaire selon l'une des revendications précédentes, **caractérisé en ce que** les éléments de support (10-14 ; 10'-14') sont montés mobiles sur le rail (6) par un guidage à glissement.

13. Entraînement linéaire selon l'une des revendications précédentes, **caractérisé en ce que** l'écrou de broche (5) est guidé de manière bloquée en rotation sur le rail (6), en particulier est monté sur le rail (6) de manière à pouvoir être déplacé par des éléments roulants ou un guidage à glissement.
